# EUROPÄISCHE PATENTSCHRIFT

(11) **EP 4 413 905 B1**
(45) Veröffentlichungstag und Bekanntmachung des Hinweises auf die Patenterteilung: **30.07.2025**
(21) Anmeldenummer: 24154087.1
(22) Anmeldetag: 26.01.2024
(51) Int. Cl.: A47J 31/46

(54) **PROPORTIONALVENTIL**
PROPORTIONAL VALVE
SOUPAPE PROPORTIONNELLE

(30) Priorität: 07.02.2023 DE 102023102886
(43) Veröffentlichungstag der Anmeldung: 14.08.2024
(73) Patentinhaber: BV Solutions GmbH, 8762 Schwändi b. Schwanden (CH)
(72) Erfinder: Balkau, Simon André, 8750 Glarus (CH); Balkau, Marcel Marius, 8753 Mollis (CH)
(74) Vertreter: Köchling, Marietta

(56) Entgegenhaltungen:
- US-A1- 2018 317 701
- US-B2- 10 925 434

## Beschreibung

Die Erfindung betrifft Heißgetränkemaschine oder Kaffeemaschine, zumindest aufweisend eine Heizung zur Erhitzung von Wasser, eine Pumpe und eine mittels eines Leitungssystems verbundene Getränkeauslassöffnung, wobei die Heißgetränkemaschine oder Kaffeemaschine Kaffeemischgetränke oder Teemischgetränke mit einer gewünschten Menge an Wasser, Wasserdampf oder Milch oder Milchschaum mittels eines sensorgesteuerten Proportionalventils mit einem Schrittmotor und einer axial verstellbaren etwa kreisrunden Ventilnadel erzeugt, wobei mittels nur eines in unterschiedliche Stellungen einstellbaren Proportionalventils eine beliebig dosierbare Menge an Flüssigkeit, Dampf oder Luft erzeugt oder erzeugbar ist, wobei das Proportionalventil zusätzlich mindestens eine Stellung aufweist, in der es vollständig geschlossen ist.

Dabei sind beim Verbraucher besonders sogenannte Kaffeevollautomaten äußerst beliebt und weit verbreitet. Mittels derartiger Kaffeevollautomaten können Kaffeemischgetränke wie beispielsweise Cappuccino, Latte Macciato und weitere Kombinationen aus Kaffee, Wasser und Milch oder Milchschaum in einem gewünschten Mischverhältnis hergestellt werden.

Zur Erzeugung der gewünschten Menge an Wasser, Wasserdampf oder Milch oder Milchschaum ist es üblich, sogenannte Proportionalventile zu verwenden. Hierbei sind auf dem Markt verschiedene Arten von Proportionalventilen bekannt und verbreitet. Bei einem ersten im Stand der Technik bekannten Proportionalventil ist eine Spule vorgesehen, welche bei Beaufschlagung mit Strom einen Anker vertikal verschieben kann. Je nach beaufschlagtem Strom wird der Anker somit mehr oder weniger verschoben und in eine Position verstellt, in der das gewünschte Medium erzeugt werden kann. Bei dieser Lösung ist es nachteilig, dass bei einer länger andauernden Benutzung große Wärme in der Spule entsteht, welche die genaue Position des Ankers beeinflusst, so dass die nicht mehr gewährleistet ist und somit die geforderte Qualität der Menge des Mediums nicht mehr gleichmäßig erzeugt werden kann.

In einer verbesserten Variante dieser Lösung ist die Spule durch einen Schrittmotor ersetzt, wodurch diese Ungenauigkeiten überwiegend vermieden sind. Diese Lösungen verfügen jedoch nicht über eine Ventilnadel, die eine deutlich höhere Präzision bei der Erzeugung von Mischverhältnissen zur Erzielung von gewünschten Mischgetränken erzeugt.

In einer weiteren im Stand der Technik bekannten Lösung, ragt eine axial verstellbare Nadel durch ein Loch in einen Ventilkörper hinein und weist dort je nach eingestellter Lage einen vorgegebenen Strömungsquerschnitt auf, der zur Erzeugung des gewünschten Produktes wie Milchschaum oder Wasserdampf dient.

Bei einer derartigen Lösung ist es nachteilig, dass diese nicht komplett geschlossen werden kann.

Zudem ist es mit den bekannten Lösungen nicht möglich, mittels nur eines Proportionalventils sämtliche Funktionen wie die Vermischung von Wasser oder Tee oder Dampf oder Schaum oder eine beliebige Kombination daraus zu erzeugen. Hierzu müssen in der Regel mehrere Proportionalventile an einer Getränkemaschine verwendet werden. So kann beispielsweise ein erstes Proportionalventil zur Erzeugung von einer gewünschten Mischung aus Wasser und Wasserdampf und ein zweites zur Erzielung einer gewünschten Mischung aus Milch und Milchschaum an der Getränkemaschine angeordnet und benötigt sein.

Dies ist insbesondere dadurch begründet, dass je nach gewünschtem zu erzeugenden Produkt eine bestimmte Nadelform benötigt wird. So muss beispielsweise bei im Stand der Technik bekannten Lösungen zur Zumischung einer bestimmten Menge Luft eine komplett andere Nadelgeometrie ausgebildet sein, als bei der Zumischung von kaltem zu warmem Wasser.

Eine Heißgetränkemaschine gattungsgemäßer Art ist aus der US 2018/317701 A1 bekannt. Eine weitere Heißgetränkemaschine gattungsgemäßer Art ist aus der US 10,925,434 B2 vorbekannt.

Aufgrund des eingangs genannten Standes der Technik liegt der vorliegenden Erfindung die Aufgabe zugrunde, eine Getränkemaschine oder Kaffeemaschine der eingangs genannten Art zu schaffen, die ein universell einsetzbares Proportionalventil aufweist, dessen Ventilnadel für eine hohe Anzahl an unterschiedlichen Anwendungen zur Erzeugung von gewünschten Mischgetränken verwendbar ist, welches dabei einen eine Nullstellung bildenden Resetpunkt aufweist, welches ferner während des Verfahrens zwischen den verschiedenen Arbeitsbereichen eine zusätzliche Position der Ventilnadel ermöglicht, in der das Ventil vollständig geschlossen ist, die dabei kostengünstig und einfach herstellbar ist und eine hohe Lebensdauer aufweist.

Zur Lösung dieser Aufgabe schlägt die Erfindung vor, dass das Proportionalventil zwei Stellungen aufweist, in der es vollständig geschlossen ist, wobei die erste geschlossene Stellung durch eine Nullstellung gebildet ist, die gleichzeitig eine Resetstellung bildet, und die zweite geschlossene Stellung beim axialen Verstellen der Ventilnadel vor Erreichen der der Nullstellung entgegengesetzten Endlage angeordnet ist.

Dadurch, dass mittels nur eines in unterschiedliche Stellungen einstellbaren Proportionalventils eine beliebig dosierbare Menge in einem beliebig dosierbaren Mischungsverhältnis sowohl von Flüssigkeit, Dampf oder Luft erzeugbar ist, kann mittels nur eines an einer Getränkemaschine ausgebildeten Proportionalventils nahezu jedes Mischgetränk aus den oben genannten Komponenten erzeugt werden. Durch die Sensorsteuerung des Proportionalventils können beispielsweise in einem dort vorhandenem Speicher gewünschte Mischungsverhältnisse von derartigen Kaffeemischgetränken oder Teemischgetränken hinterlegt werden, die ein Benutzer durch eine Schnellwahltaste auswählt und die allesamt mittels nur eines Proportionalventils erzeugbar sind. Bei der Erzeugung der gewünschten Mischgetränke verfährt das Proportionalventil je nach gewünschtem Mischgetränk während der Erzeugung des Getränkes gegebenenfalls in eine Stellung, in der es vollständig geschlossen ist, um anschließend weiter zu verfahren in eine Stellung, in der ein weiterer Teil des gewünschten Mischgetränkes erzeugt wird. Dies kann zum Beispiel in einem ersten Bereich der Durchfluss von Wasser oder Tee oder Kaffee sein und in einem zweiten Bereich nach Ansteuerung der vollständig geschlossenen Version das Hinzufügen von Dampf oder Luft zur Erzeugung beispielsweise von Schaum.

Ein derartiges erfindungsgemäßes Proportionalventil ist gegenüber den bekannten Lösungen deutlich hinsichtlich der Variabilität der Erzeugung von Kaffeemischgetränken oder Teemischgetränken erweitert und weist insbesondere zudem eine zusätzliche Stellung auf, in der es vollständig geschlossen ist.

Das erfindungsgemäße Proportionalventil weist somit zwei Stellungen auf, in denen das Ventil vollkommen geschlossen ist. Dies bedeutet, dass bei der axialen Verstellung der Ventilnadel, welches auch als Verfahren bezeichnet wird, das Ventil zuerst eine Nullstellung aufweist, in der es vollständig geschlossen ist, wobei diese Nullstellung gleichzeitig eine Resetstellung zur Zurücksetzung der Sensorsteuerung bildet und während des Verfahrens in Richtung der entgegengesetzten Endlage eine weitere geschlossene Stellung aufweist.

Insbesondere kann besonders bevorzugt vorgesehen sein, dass die axial verstellbare Ventilnadel Bereiche mit unterschiedlichen Durchmessern und unterschiedlichen Konturen aufweist, wobei das freie Ende der Ventilnadel in einen Ventilkörper und eine darin angeordnete Ventildichtung eintaucht und dort gegenüber dem Ventilkörper und der Ventildichtung höhenverstellbar ist.

Dabei kann besonders bevorzugt vorgesehen sein, dass das freie Ende der Ventilnadel bei der axialen Verstellung der Ventilnadel in verschiedene, aufeinander folgende Positionen in den Ventilkörper und dessen Ventildichtung eintaucht, wobei in einer ersten Position der Ventilnadel das Proportionalventil vollständig geschlossen ist und in einer zweiten Position der Ventilnadel ein Durchströmen von Flüssigkeit und in einer dritten Position der Ventilnadel ein Durchströmen von Dampf und in einer vierten Position der Ventilnadel dieses erneut vollständig geschlossen ist und in einer fünften Position der Ventilnadel das Durchströmen von Luft ermöglicht ist.

Durch eine derartige Ausgestaltung der verstellbaren Ventilnadel ist jedem unterschiedlich ausgestalteten Bereich der Ventilnadel die Erzeugung je eines Produktes zugeordnet. Dies bedeutet, dass die Kontur der Ventilnadel während des Durchströmens von Dampf eine andere Form oder Ausgestaltung aufweist, als beim Durchströmen von Luft oder Flüssigkeit wie beispielsweise von Wasser oder Kaffee oder Tee.

Dadurch, dass das Ventil in der vierten Position erneut vollständig geschlossen ist und ein Durchströmen verhindert, kann auf ein Durchfahren der vorherigen Positionen verzichtet werden, falls lediglich Luft das Ventil durchströmen soll. Es ist also nicht nötig, zur Durchströmung von Luft zuerst in die Nullstellung zu verfahren und anschießend die Positionen zum Durchströmen von Dampf und Flüssigkeit zu Durchfahren, um eine Durchströmung des Ventils mit Luft zu ermöglichen.

Weiter kann dabei besonders bevorzugt vorgesehen sein, dass die Ventilnadel in ihrem Eintauchbereich einen ersten konischen Bereich zur Durchströmung von Flüssigkeit aufweist, an den unmittelbar ein zweiter konischer Bereich angrenzt, der zur Durchströmung von Dampf vorgesehen ist, der zudem an seiner dem ersten konischen Bereich abgewandten Seite einen Radius aufweist, der in einer um die Ventilnadel umlaufende Nut ausläuft, und am anderen Ende der Nut ein zweiter Radius ausgebildet ist, der übergeht zu einem kegelstumpfartigen Bereich mit einer zu seinem freien Ende hin mündenden, axial gerichteten und über einen Teil der Länge des kegelstumpfartigen Bereichs ausgebildeten Längsnut, die je nach Stellung der Ventilnadel das Durchströmen einer gewünschten Menge an Luft ermöglicht.

Eine derartige erfindungsgemäße Ventilnadel ist quasi in unterschiedliche Sektionen zur Erzeugung unterschiedlicher Produkte aufgeteilt. Somit ist es möglich, mittels nur eines Proportionalventils mehrere, hier mindestens vier verschiedene Verwendungen abzudecken. So kann beispielsweise in einer ersten bevorzugten Anwendung zum Schäumen von Flüssigkeit mittels eines Leitungssystems die zu schäumende Flüssigkeit zugeführt werden und im Proportionalventil eine bestimmte veränderbare Menge an Luft der zu schäumenden Flüssigkeit, insbesondere Milch oder kalter Kaffee, zugeführt werden, so dass der gewünschte Schaum, insbesondere Milch oder kalter Kaffeeschaum, erzeugt **wird.** Anschließend wird dieser mittels einer Pumpe zum Auslass gepumpt.

In einer weiteren bevorzugten Funktion oder Anwendung kann beispielsweise eine Vermischung von kaltem mit warmem Wasser erfolgen oder einer Flüssigkeit mit Dampf erfolgen, um eine gewünschte Ausgangstemperatur des Getränkes zu erhalten. Hierzu wird in einem weiteren Bereich des Proportionalventils das aus der Heizung des Systems austretende heiße Wasser mit kaltem Wasser zu einer bestimmten Temperatur vermischt. Dies erfolgt über ein Sensorsystem, welches den Durchfluss durch die Ventilnadel des Proportionalventils regelt. Somit kann beispielsweise dem Wunsch des Verbrauchers nachgekommen werden, für jedes seiner Produkte eine gewünschte eigene Temperatur zu erzeugen.

Weiter kann das erfindungsgemäße Proportionalventil alternativ auch als autonomes Ventil ohne Sensorsystem Verwendung finden, wobei dennoch immer eine bestimmte Position zur Durchflussmengenkontrolle angefahren werden kann, dies bedeutet, dass die Ventilnadel in eine jeweils vorgegebene Position mittels des Schrittmotors verfahrbar ist.

Eine weitere bevorzugte Anwendung des erfindungsgemäßen Proportionalventils ist es, Dampf zu erzeugen. Beispielsweise in einer Milch. Hierzu wird mittels einer entsprechenden Leitung Milch eingebracht und mittels einer durch die Sensorsteuerung des Proportionalventils vorgegebenen Menge Wasserdampf auf eine wunschgemäße Temperatur erhitzt und anschließend zum Auslass weitergepumpt.

Als weitere erfindungsgemäße Besonderheit weist das erfindungsgemäße Proportionalventil zusätzlich eine weitere Stellung auf, in der es vollständig geschlossen ist. Dies bedeutet, dass neben der Nullstellung auch während des Verfahrens der Ventilnadel in die verschiedenen Positionen eine weitere Stellung ermöglicht ist, in der das Ventil vollständig geschlossen ist. Dabei dient die erste Nullstellung üblicherweise dazu, das Proportionalventil zu reseten, damit anschließend nach dem Reset immer exakt die programmierte Position zur Erzeugung der gewünschten Anwendung angefahren werden kann.

Weiter kann dabei besonders bevorzugt vorgesehen sein, dass die Ventildichtung einen zu den konischen Bereichen der Ventilnadel gegensinnig konischen Bereich aufweist, der den Eintauchbereich für die Ventilnadel bildet.

Dabei kann besonders bevorzugt vorgesehen sein, dass der konische Bereich der Ventildichtung an seiner der Ventilnadel zugewandten Seite im Durchmesser erweitert ist.

Durch die Ausbildung eines derartigen gegensinnig konischen Bereiches an der Ventildichtung ist es sichergestellt, dass nur das gewünschte Medium in der gewünschten Anwendungssektion beziehungsweise in dem gewünschten Anwendungsbereich durch den entsprechenden Durchgang durchströmen beziehungsweise durchfließen kann, um jederzeit zum gewünschten Produkt wie beispielsweise einer Vermischung von Heiß- und Kaltwasser oder zur Erzeugung von Dampf oder Schaum zu gelangen.

In einem besonders bevorzugt vorgesehenen Ausführungsbeispiel der Erfindung kann besonders bevorzugt vorgesehen sein, dass der konische Bereich an seiner schmalsten Stelle einen Winkel von etwa 8 Grad umschließt und an seiner breitesten Stelle einen Winkel von etwa 16 Grad umschließt.

Durch diese Winkel ist ein besonders effizienter Betrieb zur Erzeugung der jeweiligen Anwendungen ermöglicht. Je nach Ausgestaltung der konischen Bereiche der Ventilnadel kann jedoch auch ein deutlich von den hier angegebenen Gradzahlen abweichender Winkel vorgesehen sein.

Schließlich kann besonders bevorzugt vorgesehen sein, dass, die Ventilnadel eine weitere Dichtung aufweist, die umlaufend um die Ventilnadel zwischen erstem konischen Bereich und dem Schrittmotor angeordnet ist, die in der Nullstellung an einer Anlagefläche der Ventildichtung anliegt.

Durch diese erfindungsgemäße Dichtung ist es sichergestellt, dass in der Resetstellung, die die Nullstellung bildet, das System vollständig abgedichtet ist.

Ein Ausführungsbeispiel der Erfindung ist in den Figuren dargestellt und im Folgenden näher beschrieben.

Es zeigt:

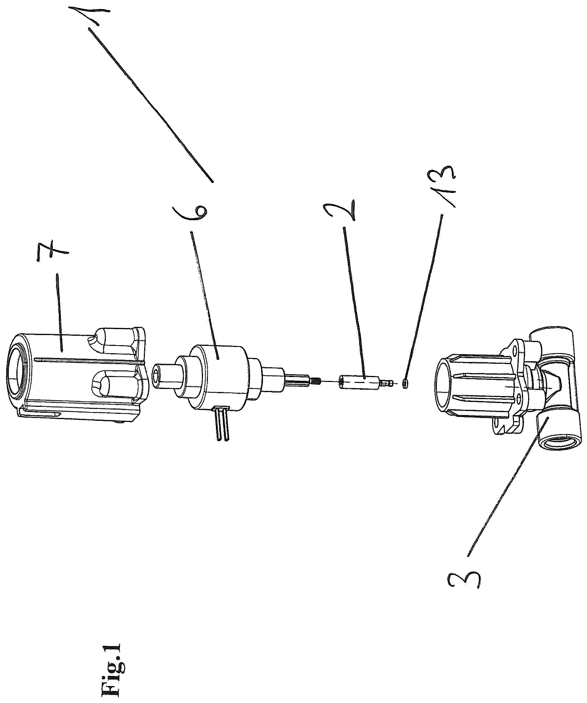

- Figur 1: wesentliche Teile eines erfindungsgemäßen Proportionalventils in Explosionsdarstellung;
- Figur 2: das freie Ende einer erfindungsgemäßen Ventilnadel 2 mit unterschiedlich ausgebildeten Bereichen;
- Figur 3: die Ventilnadel 2 in der Position in der Luftdurchströmung ermöglicht ist;
- Figur 4: desgleichen in einer weiteren Ansicht;
- Figur 5: die Position der Ventilnadel 2 in einer weiteren geschlossenen Stellung;
- Figur 6: desgleichen in einer weiteren Ansicht;
- Figur 7: die Ventilnadel 2 in der vollständig geschlossenen Nullstellung (Resetstellung) ;
- Figur 8: die Ventilnadel 2 in einer Stellung, in der Flüssigkeit oder Dampf durch das Proportionalventil 1 durchströmen kann.

In den Figuren sind wesentliche Teile eines Proportionalventils 1 gezeigt. Ein derartiges Proportionalventil 1 findet Verwendung in Getränkemaschinen oder Kaffeemaschinen, die zur Zubereitung von Kaffeemischgetränken wie beispielsweise Cappuccino, Latte Macciato oder dergleichen aus Kaffee und Milchschaum oder Milch bestehenden Mischgetränken dienen. Zusätzlich findet ein derartiges Proportionalventil 1 auch Verwendung bei entsprechenden Getränkemaschinen zur Erzeugung von Teemischgetränken usw.

Eine derartige Heißgetränkemaschine mit einem Proportionalventil 1 umfasst dabei zumindest eine Heizung zur Erhitzung von Wasser, eine Pumpe und eine, mittels eines Leitungssystems verbundene Getränkeauslassöffnung. Dabei erzeugt das Proportionalventil 1 das gewünschte Produkt, bestehend aus Flüssigkeit und Dampf oder Schaum oder gegebenenfalls auch eine wunschgemäße Vermischung von zugeführten Flüssigkeiten mit verschiedenen Temperaturen.

Erfindungsgemäß kann durch ein in den Figuren dargestelltes Proportionalventil 1 eine beliebig dosierbare Menge an Flüssigkeit, Dampf oder Luft erzeugt werden, wobei das Proportionalventil 1 zusätzlich mindestens eine Stellung aufweist, in der es vollständig geschlossen ist, wobei alle genannten Funktionen mittels nur eines Proportionalventils 1 erzeugbar sind.

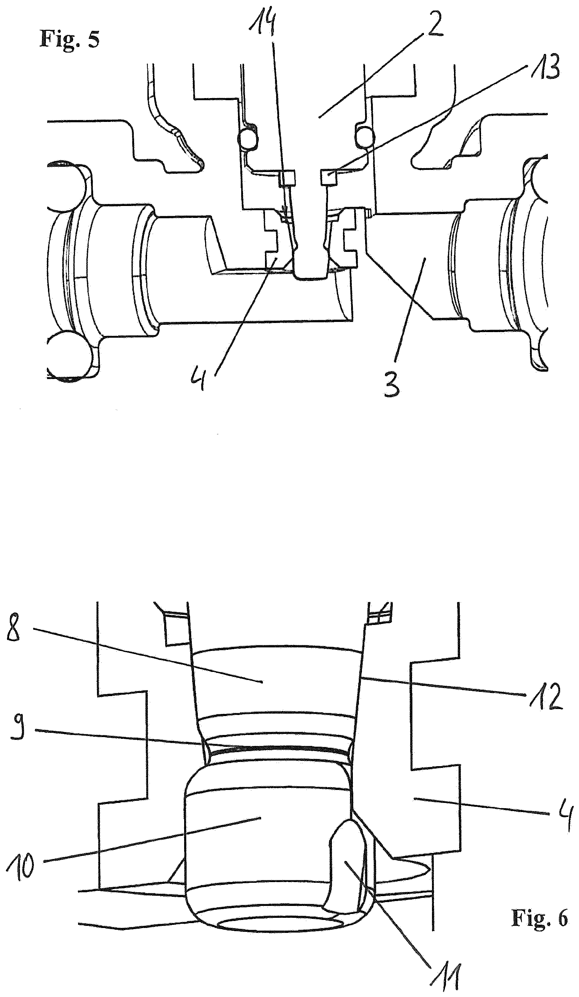

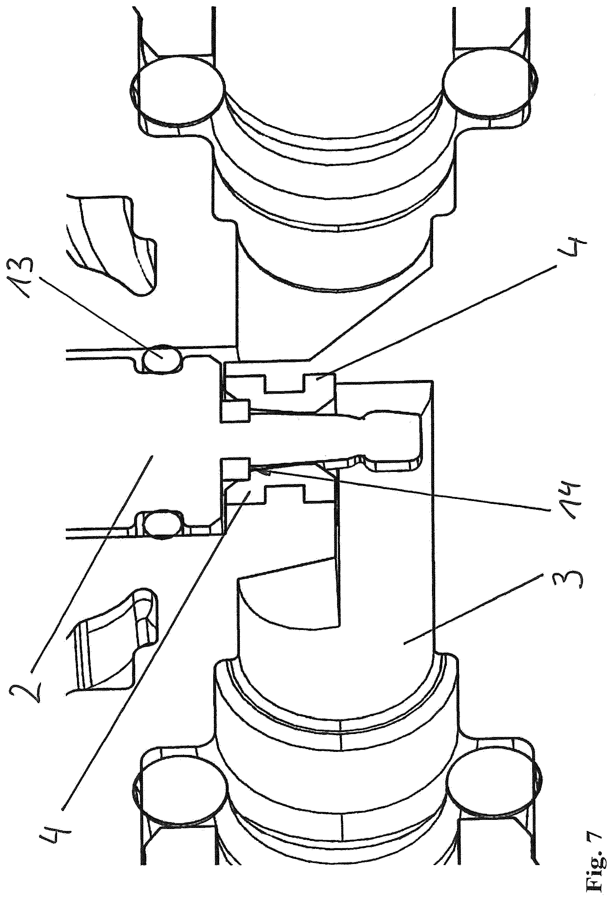

Im Ausführungsbeispiel weist das Proportionalventil 1 zwei Stellungen auf, in denen es vollständig geschlossen ist. Die erste geschlossene Stellung, die in Figur 7 gezeigt ist, bildet dabei gleichzeitig eine Resetstellung, um der Steuerelektronik zu signalisieren, dass sich die Ventilnadel 2 in der Grundstellung befindet. Die zweite geschlossene Stellung ist in den Figuren 5 und 6 gezeigt und dabei befindet sich die Ventilnadel 2 in einer Lage kurz vor Erreichen einer der Nullstellung entgegengesetzten Endlage.

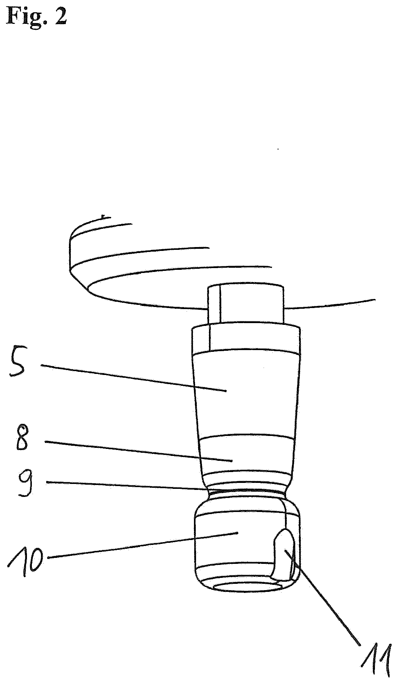

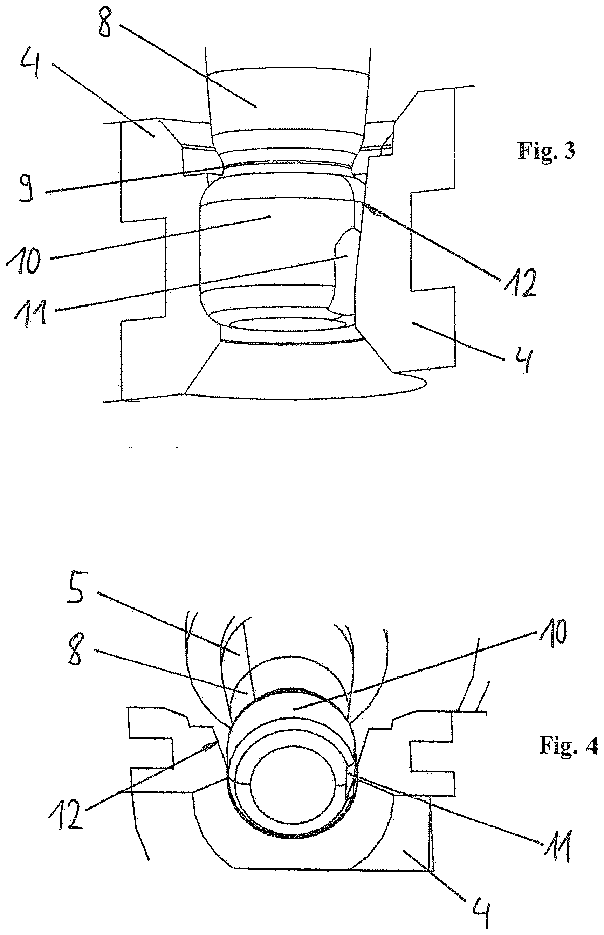

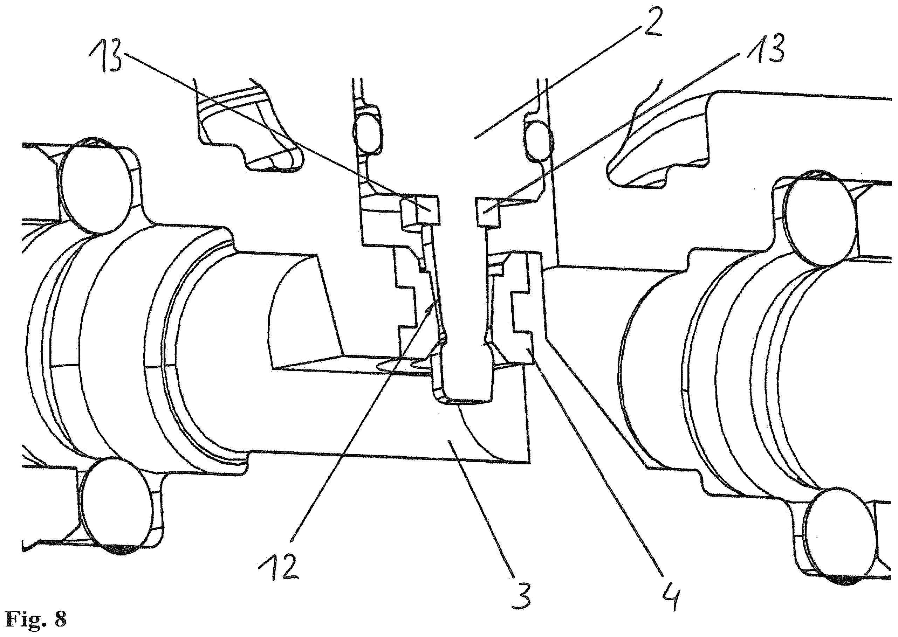

Wie insbesondere aus den Figuren 2 bis 8 ersichtlich, ist das freie Ende der Ventilnadel 2 gegenüber dem Ventilkörper 3 und dessen Ventildichtung 4 höhenverstellbar. Bei der Höhenverstellung taucht das freie Ende der Ventilnadel 2 in den Ventilkörper 3 und die darin angeordnete Ventildichtung 4 ein, um in einer vorgegebenen Lage das jeweils gewünschte Produkt, wie beispielsweise Dampf, Schaum oder die Vermischung von verschiedene Temperaturen aufweisenden Flüssigkeiten zu erzeugen. Zur Erzeugung der verschiedenen Produkte sind an der axial verstellbaren Ventilnadel 2 im Bereich ihres freien Endes Bereiche mit unterschiedlichen Durchmessern und unterschiedlichen Konturen ausgebildet. Das Eintauchen des freien Endes der Ventilnadel 2 in den Ventilkörper 3 und die darin angeordnete Ventildichtung 4 erfolgt aufgrund des in einem Gerät angeordneten Schrittmotors 6 in aufeinander folgenden Positionen, in denen die Ventilnadel 2 jeweils solange verbleibt, bis der in dieser Position erfolgte Prozess abgeschlossen ist. Dabei ist beispielsweise in einer ersten Position der Ventilnadel 2 das Proportionalventil 1 vollständig geschlossen und in einer zweiten Position der Ventilnadel 2 ein Durchströmen von Flüssigkeit und in einer dritten Position der Ventilnadel 2 ein Durchströmen von Dampf ermöglicht. In einer weiteren, vierten Position der Ventilnadel 2 ist das Proportionalventil erneut vollständig geschlossen und in einer darauf folgenden fünften Position der Ventilnadel 2 ist das Durchströmen von Luft ermöglicht.

Wie insbesondere aus Figur 2 ersichtlich, weist die Ventilnadel 2 in ihrem Eintauchbereich einen ersten konischen Bereich 5 zur Durchströmung von Flüssigkeit auf. An den ersten konischen Bereich 5 grenzt unmittelbar ein zweiter konischer Bereich 8 an, der zur Durchströmung von Dampf vorgesehen ist. Am ersten konischen Bereich 5 abgewandtem Ende des zweiten Konischen Bereichs 8 folgt eine um die Ventilnadel 2 umlaufende Nut 9, wobei der Übergang zwischen zweitem konischen Bereich 8 und Nut 9 durch einen ersten Radius gebildet ist. An dem anderen Ende der Nut 9, also an der dem zweiten konischen Bereich 8 abgewandten Seite ist ein zweiter Radius ausgebildet, der zu einem kegelstumpfartigen Bereich 10 übergeht. An der Außenmantelfläche des kegelstumpfartigen Bereichs 10 ist eine zum freien Ende des kegelstumpfartigen Bereichs 10 mündende, axial gerichtete und sich über einen Teil der Länge des kegelstumpfartigen Bereichs 10 erstreckende Längsnut 11 ausgebildet. Mittels dieser Längsnut 11 ist je nach Stellung der Ventilnadel 2 das Durchströmen einer gewünschten Menge an Luft ermöglicht.

Um eine effiziente Durchströmung durch das Proportionalventil 1 zu ermöglichen, weist die Ventildichtung 4 einen zu den konischen Bereichen 5, 8 der Ventilnadel 2 gegensinnig konischen Bereich 12 auf. Dieser konische Bereich 12 der Ventildichtung 4 bildet dabei den Eintauchbereich für die Ventilnadel 2 beziehungsweise deren freies Ende. Dabei ist die Ventildichtung 4 beziehungsweise deren konischer Bereich 12 an seiner der Ventilnadel 2 zugewandten Seite im Durchmesser erweitert. Der konische Bereich 12 umschließt im Ausführungsbeispiel an seiner schmalsten Stelle einen Winkel von etwa 8 Grad und umschließt an seiner breitesten Stelle einen Winkel von etwa 16 Grad. Diese Winkelangaben beziehen sich ausschließlich auf das in den Figuren gezeigte Ausführungsbeispiel und können auch durch größere oder kleinere Öffnungswinkel in abweichenden Ausführungsbeispielen gebildet sein. Zur Erzielung einer besonders hohen Lebensdauer besteht die Ventildichtung 4 im Ausführungsbeispiel aus Metall.

Zur Abdichtung in der Nullstellung, die auch die Resetstellung für die Steuerelektronik des Schrittmotors 6 bildet, weist die Ventilnadel 2 eine weitere Dichtung 13 auf, die umlaufend um die Ventilnadel 2 zwischen erstem konischen Bereich 5 und dem Schrittmotor 6 angeordnet ist. In der Nullstellung liegt die weitere Dichtung 13 an einer Anlagefläche 14 der Ventildichtung 4 an und dichtet die Ventilnadel 2 gegenüber der Ventildichtung 4 ab.

Mittels eines in den Figuren gezeigten erfindungsgemäßen Proportionalventils 1 kann somit mittels nur eines Proportionalventils 1 an einer Heißgetränkemaschine oder Kaffeemaschine eine beliebig dosierbare Menge an Flüssigkeit, Dampf oder Schaum oder eine Mischung daraus erzeugt werden. Zudem ist das Proportionalventil 1 in eine abgedichtete Stellung verfahrbar, so dass ein Durchströmen verhindert ist.

Zudem ist es bei einem erfindungsgemäßen Proportionalventil 1 ermöglicht, die Ventilnadel 2 in eine weitere, von der Nullstellung abweichende Stellung zu verfahren, in der ebenfalls eine vollständige Schließung des Ventils erfolgt. Diese Stellung ist vorzugsweise derart angeordnet, dass anschließend die Zuführung von Luft oder Dampf freigegeben werden kann, so dass dieser durch die vorherige Schließstellung besonders gut und exakt dosierbar ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

### Bezugszeichenliste:

1) Proportionalventil
2) Ventilnadel
3) Ventilkörper
4) Ventildichtung
5) erster konischer Bereich
6) Schrittmotor
7) Montagegehäuse
8) zweiter konischer Bereich
9) Nut
10) kegelstumpfartiger Bereich
11) Längsnut
12) Konischer Bereich an 4
13) Weitere Dichtung an 2
14) Anlagefläche an 4

## Patentansprüche

1. Heißgetränkemaschine oder Kaffeemaschine, zumindest aufweisend eine Heizung zur Erhitzung von Wasser, eine Pumpe und eine mittels eines Leitungssystems verbundene Getränkeauslassöffnung, wobei die Heißgetränkemaschine oder Kaffeemaschine Kaffeemischgetränke oder Teemischgetränke mit einer gewünschten Menge an Wasser, Wasserdampf oder Milch oder Milchschaum mittels eines sensorgesteuerten Proportionalventils (1) mit einem Schrittmotor (6) und einer axial verstellbaren etwa kreisrunden Ventilnadel (2) erzeugt, wobei mittels nur eines in unterschiedliche Stellungen einstellbaren Proportionalventils (1) eine beliebig dosierbare Menge an Flüssigkeit, Dampf oder Luft erzeugt oder erzeugbar ist, wobei das Proportionalventil (1) zusätzlich mindestens eine Stellung aufweist, in der es vollständig geschlossen ist, **dadurch gekennzeichnet, dass** das Proportionalventil (1) zwei Stellungen aufweist, in der es vollständig geschlossen ist, wobei die erste geschlossene Stellung durch eine Nullstellung gebildet ist, die gleichzeitig eine Resetstellung bildet, und die zweite geschlossene Stellung beim axialen Verstellen der Ventilnadel (2) vor Erreichen der der Nullstellung entgegengesetzten Endlage angeordnet ist.

2. Heißgetränkemaschine oder Kaffeemaschine nach Anspruch 1, **dadurch gekennzeichnet, dass** die axial verstellbare Ventilnadel (2) Bereiche mit unterschiedlichen Durchmessern und unterschiedlichen Konturen aufweist, wobei das freie Ende der Ventilnadel (2) in einen Ventilkörper (3) und eine darin angeordnete Ventildichtung (4) eintaucht und dort gegenüber dem Ventilkörper (3) und der Ventildichtung (4) höhenverstellbar ist.

3. Heißgetränkemaschine oder Kaffeemaschine nach Anspruch 2, **dadurch gekennzeichnet, dass** das freie Ende der Ventilnadel (2) bei der axialen Verstellung der Ventilnadel (2) in verschiedene, aufeinander folgende Positionen in den Ventilkörper (3) und dessen Ventildichtung (4) eintaucht, wobei in einer ersten Position der Ventilnadel (2) das Proportionalventil (1) vollständig geschlossen ist und in einer zweiten Position der Ventilnadel (2) ein Durchströmen von Flüssigkeit und in einer dritten Position der Ventilnadel (2) ein Durchströmen von Dampf und in einer vierten Position der Ventilnadel (2) dieses erneut vollständig geschlossen ist und in einer fünften Position der Ventilnadel (2) das Durchströmen von Luft ermöglicht ist.

4. Heißgetränkemaschine oder Kaffeemaschine nach Anspruch 2 oder 3, **dadurch gekennzeichnet, dass** die Ventilnadel (2) in ihrem Eintauchbereich einen ersten konischen Bereich (5) zur Durchströmung von Flüssigkeit aufweist, an den unmittelbar ein zweiter konischer Bereich (8) angrenzt, der zur Durchströmung von Dampf vorgesehen ist, der zudem an seiner dem ersten konischen Bereich (5) abgewandten Seite einen Radius aufweist, der in einer um die Ventilnadel (2) umlaufende Nut (9) ausläuft, und am anderen Ende der Nut (9) ein zweiter Radius ausgebildet ist, der übergeht zu einem kegelstumpfartigen Bereich (10) mit einer zu seinem freien Ende hin mündenden, axial gerichteten und über einen Teil der Länge des kegelstumpfartigen Bereichs (10) ausgebildeten Längsnut (11), die je nach Stellung der Ventilnadel (2) das Durchströmen einer gewünschten Menge an Luft ermöglicht.

5. Heißgetränkemaschine oder Kaffeemaschine nach Anspruch 4, **dadurch gekennzeichnet, dass** die Ventildichtung (4) einen zu den konischen Bereichen (5,8) der Ventilnadel (2) gegensinnig konischen Bereich (12) aufweist, der den Eintauchbereich für die Ventilnadel (2) bildet.

6. Heißgetränkemaschine oder Kaffeemaschine nach Anspruch 5, **dadurch gekennzeichnet, dass** der konische Bereich (12) der Ventildichtung (4) an seiner der Ventilnadel (2) zugewandten Seite im Durchmesser erweitert ist.

7. Heißgetränkemaschine oder Kaffeemaschine nach Anspruch 5 oder 6, **dadurch gekennzeichnet, dass** der konische Bereich (12) an seiner schmalsten Stelle einen Winkel von etwa 8 Grad umschließt und an seiner breitesten Stelle einen Winkel von etwa 16 Grad umschließt.

8. Heißgetränkemaschine oder Kaffeemaschine nach Anspruch 1 und einem der Ansprüche 4 bis 7, **dadurch gekennzeichnet, dass** die Ventilnadel (2) eine weitere Dichtung (13) aufweist, die umlaufend um die Ventilnadel (2) zwischen erstem konischen Bereich (5) und dem Schrittmotor (6) angeordnet ist, die in der Nullstellung an einer Anlagefläche (14) der Ventildichtung (4)anliegt.

## Claims

1. A hot beverage machine or coffee machine, at least comprising a heater for heating water, a pump and a beverage outlet opening connected by means of a conduit system, the hot beverage machine or coffee machine producing mixed coffee beverages or mixed tea beverages with a desired amount of water, steam or milk or milk foam by means of a sensor-controlled proportional valve (1) with a stepper motor (6) and an axially adjustable, approximately circular valve needle (2), by means of only one proportional valve (1), which can be set to different positions, a quantity of liquid, steam or air which can be metered as desired being produced or producible, the proportional valve (1) additionally having at least one position in which it is completely closed, **characterized in that** the proportional valve (1) has two positions, in which it is completely closed, the first closed position being formed by a zero position, which simultaneously forms a reset position, and the second closed position being arranged when the valve needle (2) is axially displaced before reaching the end position opposite the zero position.

2. The hot beverage machine or coffee machine of claim 1, **characterized in that** the axially adjustable valve needle (2) has portions with different diameters and different contours, the free end of the valve needle (2) projecting into a valve body (3) and a valve seal (4) arranged therein and being height-adjustable there relative to the valve body (3) and the valve seal (4).

3. The hot beverage machine or coffee machine of claim 2, **characterized in that** the free end of the valve needle (2) projects into the valve body (3) and the valve seal (4) thereof in various successive positions during the axial displacement of the valve needle (2), in a first position of the valve needle (2) the proportional valve (1) being completely closed, and in a second position of the valve needle (2) liquid being able to flow through, and in a third position of the valve needle (2) steam being able to flow through, and in a fourth position of the valve needle (2) it being again completely closed, and in a fifth position of the valve needle (2) air being able to flow through.

4. The hot beverage machine or coffee machine of claim 2 or 3, **characterized in that** the valve needle (2) has in its projecting region a first conical portion (5) for the through-flow of liquid, a second conical portion (8) directly adjoining thereto, which is provided for the through-flow of steam and which also has on its side facing away from the first conical portion (5) a radius, which terminates in a groove (9) running around the valve needle (2), and at the other end of the groove (9) a second radius is formed which merges into a frusto-conical portion (10) with an axially directed longitudinal groove (11), which opens towards its free end and is formed over part of the length of the frusto-conical portion (10), and which, depending on the position of the valve needle (2), allows a desired quantity of air to flow through.

5. The hot beverage machine or coffee machine of claim 4, **characterized in that** the valve seal (4) has a portion (12), which is conical in the opposite direction to the conical portions (5, 8) of the valve needle (2) and which forms the projecting region for the valve needle (2).

6. The hot beverage machine or coffee machine of claim 5, **characterized in that** the conical region (12) of the valve seal (4) is widened in diameter at its side facing the valve needle (2).

7. The hot beverage machine or coffee machine of claim 5 or 6, **characterized in that** the conical portion (12) encloses an angle of approximately 8 degrees at its narrowest point and encloses an angle of approximately 16 degrees at its widest point.

8. The hot beverage machine or coffee machine of claim 1 and one of claims 4 to 7, **characterized in that** the valve needle (2) has a further seal (13), which is arranged circumferentially around the valve needle (2) between the first conical portion (5) and the stepper motor (6), which, in the zero position, bears against an abutment surface (14) of the valve seal (4).

## Revendications

1. Machine à boissons chaudes ou machine à café, comprenant au moins un chauffage pour chauffer l'eau, une pompe et un orifice de sortie de la boisson reliés au moyen d'un système de conduits, la machine à boissons chaudes ou machine à café produisant des boissons mélangées de café ou des boissons mélangées de thé avec une quantité désirée d'eau, de vapeur ou de lait ou de mousse de lait au moyen d'une soupape proportionnelle (1) commandée par un capteur avec un moteur pas à pas (6) et une aiguille de soupape (2) approximativement circulaire, réglable axialement, au moyen d'une seule soupape proportionnelle (1), qui peut être réglée à différentes positions, une quantité de liquide, de vapeur ou d'air pouvant être dosée à volonté étant ou pouvant être produite, la soupape proportionnelle (1) ayant en outre au moins une position dans laquelle elle est complètement fermée, **caractérisé en ce que** la soupape proportionnelle (1) a deux positions dans lesquelles elle est complètement fermée, la première position fermée étant formée par une position zéro qui forme simultanément une position de réinitialisation, et la seconde position fermée étant disposée lorsque l'aiguille de soupape (2) est déplacée axialement avant d'atteindre la position finale opposée à la position zéro.

2. Machine à boissons chaudes ou machine à café selon la revendication 1, **caractérisé en ce que** l'aiguille de soupape (2) réglable axialement comporte des parties de diamètres et de contours différents, l'extrémité libre de l'aiguille de soupape (2) faisant saillie dans un corps de soupape (3) et un joint de soupape (4) disposé dans ce corps et étant réglable en hauteur par rapport au corps de soupape (3) et au joint de soupape (4).

3. Machine à boissons chaudes ou machine à café selon la revendication 2, **caractérisé en ce que** l'extrémité libre de l'aiguille de soupape (2) fait saillie dans le corps de soupape (3) et son joint de soupape (4) dans diverses positions successives pendant le déplacement axial de l'aiguille de soupape (2), dans une première position de l'aiguille de soupape (2), la soupape proportionnelle (1) étant complètement fermée, et dans une deuxième position de l'aiguille de soupape (2), le liquide peut s'écouler, et dans une troisième position de l'aiguille de soupape (2), la vapeur peut s'écouler, et dans une quatrième position de l'aiguille de soupape (2), elle est à nouveau complètement fermée, et dans une cinquième position de l'aiguille de soupape (2), l'air peut s'écouler.

4. Machine à boissons chaudes ou machine à café selon la revendication 2 ou 3, **caractérisé en ce que** l'aiguille de soupape (2) présente dans sa zone saillante une première partie conique (5) pour le passage du liquide, directement adjacente à une deuxième partie conique (8) prévue pour le passage de la vapeur et qui présente également sur son côté opposé à la première partie conique (5) un rayon qui se termine par une rainure (9) faisant le tour de l'aiguille de soupape (2), et à l'autre extrémité de la rainure (9) est formé un deuxième rayon qui se fond dans une partie tronconique (10) avec une rainure longitudinale (11) dirigée axialement qui s'ouvre vers son extrémité libre et est formée sur une partie de la longueur de la partie tronconique (10) et qui, en fonction de la position de l'aiguille de soupape (2), permet à une quantité souhaitée d'air de s'écouler.

5. Machine à boissons chaudes ou machine à café selon la revendication 4, **caractérisé en ce que** le joint de soupape (4) comporte une partie (12) qui est conique dans la direction opposée aux parties coniques (5, 8) de l'aiguille de soupape (2) et qui forme la zone saillante de l'aiguille de soupape (2).

6. Machine à boissons chaudes ou machine à café selon la revendication 5, **caractérisé en ce que** la partie conique (12) du joint de soupape (4) est élargie en diamètre du côté dirigé vers l'aiguille de soupape (2).

7. Machine à boissons chaudes ou machine à café selon la revendication 5 ou 6, **caractérisé en ce que** la partie conique (12) forme un angle d'environ 8 degrés en son point le plus étroit et forme un angle d'environ 16 degrés en son point le plus large.

8. Machine à boissons chaudes ou machine à café selon la revendication 1 et une des revendications 4 à 7, **caractérisé en ce que** l'aiguille de soupape (2) comporte un autre joint (13) disposé sur la circonférence de l'aiguille de soupape (2) entre la première partie conique (5) et le moteur pas à pas (6) qui, dans la position zéro, s'appuie sur une surface de butée (14) du joint de soupape (4).
